# EUROPEAN PATENT SPECIFICATION

(11) **EP 0 670 576 B1**
(45) Date of publication and mention of the grant of the patent: **03.06.1998**
(21) Application number: 95102841.4
(22) Date of filing: 28.02.1995
(51) Int. Cl.: G21K 1/06

(54) **Grazing incidence co-axial and confocal mirrors**
Koaxialer und konfocaler Spiegel mit streifender Inzidenz
Miroirs coaxiaux et confocaux à incidence rasante

(30) Priority: 04.03.1994 IT MI940403
(43) Date of publication of application: 06.09.1995
(73) Proprietor: OSSERVATORIO ASTRONOMICO DI BRERA, Milano (IT); LABEN S.p.A., 20090 Vimodrone (Milano) (IT)
(72) Inventor: Citterio, Oberto, I-22055 Merate (Como) (IT)
(74) Representative: Lecce, Giovanni

(56) References cited:
- EP-A- 0 343 861
- GB-A- 1 045 016
- US-A- 4 370 750
- US-A- 4 554 197
- DATABASE WPI Week 8426 Derwent Publications Ltd., London, GB; AN 84-162145 & JP-A-59 087 404 (HITACHI) , 21 May 1984
- PATENT ABSTRACTS OF JAPAN vol. 14 no. 463 (E-988) ,8 October 1990 & JP-A-02 188908 (FUJITSU) 25 July 1990,
- DATABASE WPI Week 8822 Derwent Publications Ltd., London, GB; AN 88-151682 & JP-A-63 092 915 (IBIDEN) , 23 April 1988

## Description

This invention relates to grazing incidence co-axial and confocal mirrors. More particularly, this invention relates to grazing incidence co-axial and confocal mirrors particularly suitable to be utilizable in X-ray telescopes for astronomic observations.

The optics of such telescopes is composed by a plurality of co-axial and confocal mirrors, having a parabola/hyperbola, double cone truncated cone structure, polynomial sections or other geometric configurations. Such mirrors are inserted into one another, so as to form a very compact group, are provided with an internal reflecting surface constituted by a very thin gold layer, require extremely accurate preparation technologies and must have special physical characteristics.

In particular, they must have reflective surfaces whose geometry and roughness are provided for in the optical design and extremely thin walls, in order to minimize the loss of collection surface.

The material utilized for their realization must also have the following properties:
- a high modulus of elasticity, in order to have sufficient stiffness with thin thicknesses of the mirrors;
- a very low density to reduce weight as much as possible, as X-ray telescopes have to operate in the space;
- a very low thermal expansion coefficient and a very high thermal conductivity coefficient, in order to minimize optical distorsions due to temperature;
- possibility of being utilized in a replica grating process, being this the only process allowing, thanks to the thin walls, to realize mirrors having high optical qualities, starting from spindles which present the negative of the section required for X-ray optics.

As is known, optical systems for X-ray telescopes are realized utilizing nickel as mechanical structural element for the reflecting material, in a replica grading process through electromolding.

In this process, one utilizes spindles covered by a thin layer (typically 150 µm) of electrochemical nickel (Kanigen). The so covered spindles are optically worked until the geometric sections and the roughness degree (less than lnm RMS) provided for by the optical design are reached.

On the worked spindle, a layer of nickel having a thickness of 0.5-1.5 mm is then deposited by electromolding.

The mirror so obtained, constituted by nickel deposited on gold is then separated from the spindle by cooling the latter.

Separation is facilitated by the fact that the thermal expansion coefficient of aluminium is greater than that of nickel and by the fact that adhesion of gold on electrolitic nickel is much greater than adhesion of gold deposited on the aluminium spindle.

However, this replica grating technology through electromolding has different drawbacks which limit its utilization in designs requiring very high performances as concerns the quality of optical image. These drawbacks include, among others:
- very heavy optical systems, due to the utilization, as mechanical structural element, of nickel, which is a metal having a rather high specific weight (8,8 g/cm³);
- limited optical quality of reflecting surfaces, because of the deformations due to internal tensions produced during the electromolding process and the distorsions due to the thermal gradients which form because of the high thermal expansion coefficient and the low thermal conductivity of nickel.

Object of this invention is to overcome the aforementioned drawbacks.

More particularly, object of this invention is to overcome the drawbacks characteristics of the mirrors realized from nickel according to the electromolding replica grating process.

A grazing incidence co-axial and confocal mirror comprising an internal reflecting surface constituted by a gold layer, an epoxy resin layer on which said gold layer is supported, and a mechanical structural supporting element or carrier is known from GB-A-1 045 016.

The mirror of the present invention is characterized in that the supporting mechanical structural elements are realized from ceramic material having a specific weight lower than 8.8 kg m⁻³10³, preferably comprised between 2 and 4; a thermal expansion coeffient lower than 14K⁻¹10⁻⁶, preferably comprised between 2 and 5; a thermal conductivity greater than 90 W m⁻¹K⁻¹, preferably comprised between 150 and 1300, a modulus of elasticity greater than 150 G Pa, preferably comprised between 300 and 700; a thermal distorsion parameter greater than 0.60 W m⁻¹10⁷, a specific rigidity greater than 17 MN kg⁻¹10⁶, preferably comprised between 100 and 350.

Said carriers are suitable to be utilized in a replica grating process with epoxy resin on a spindle from aluminium or other equivalent material. Such replica grating process is well known and has already been experimented on berillium carriers and carriers from plastic material reinforced with carbon fibres.

This invention shall be better understood through the following description wherein reference is made to the attached drawings which represent an embodiment given by way of non limitative example of this invention, and wherein:
Fig. 1 shows the longitudinal section of a truncated cone double cone structure carrier fitted on the spindle; and
Fig. 2 is the view of the longitudinal section of a mirror.

The table lists the physical-chemical properties of some ceramic materials utilized for the fabrication of said carriers compared to those of nickel.

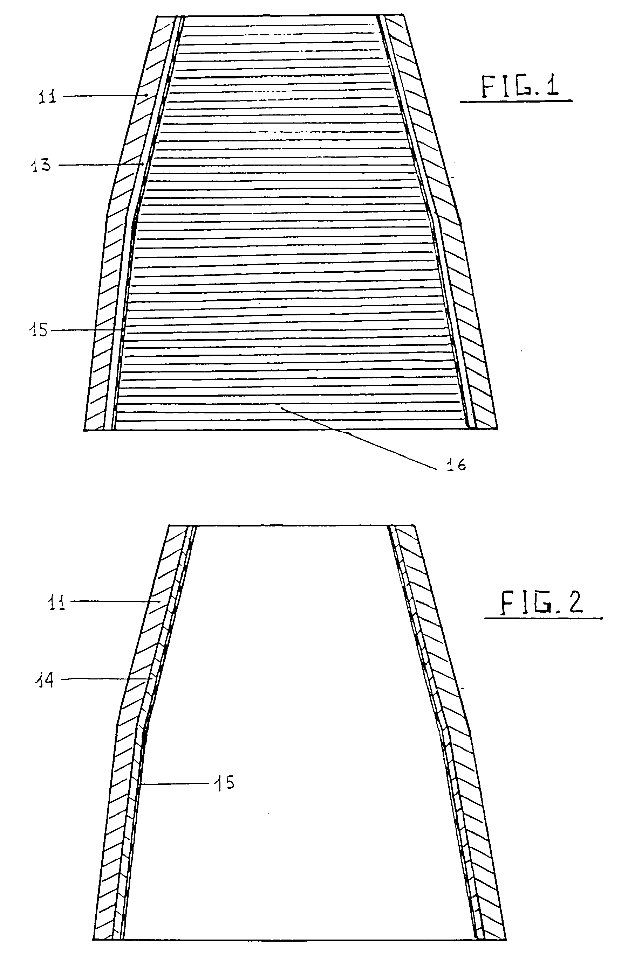

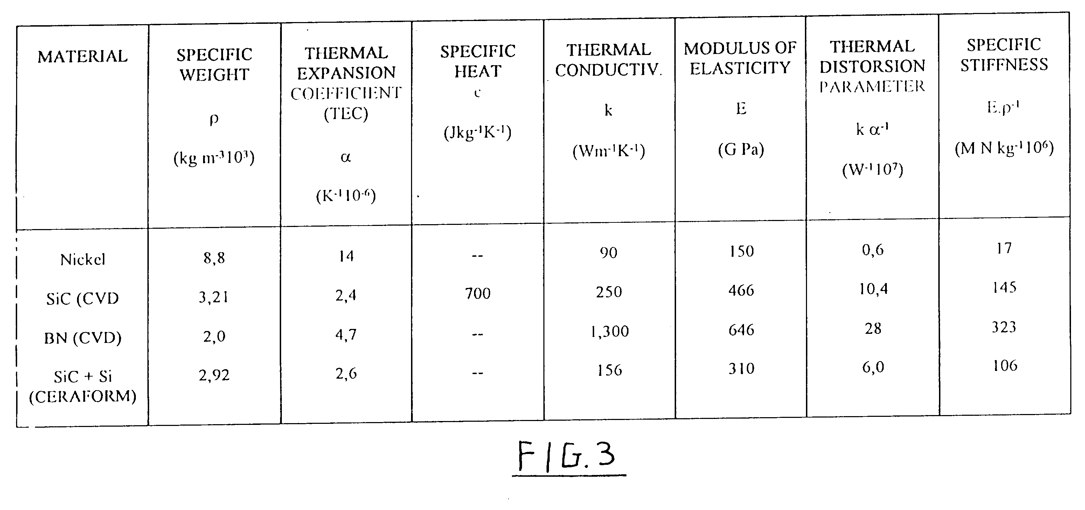

With reference to the above Figs. 1 and 2, carrier 11 from ceramic material, prepared with the CVD process or another fabrication process, is fitted on spindle 16 from aluminium or other equivalent material, pre-covered with a layer 15 of gold having a typical thickness of about 100 nm. The dimensions of carrier 11 are such as to leave a gap 13, which may be of about 0.1 mm, between said carrier 11 and spindle 16. Such gap 13 is then filled with a fluid epoxy resing 14, which polymerizes and hardens, forming a layer which covers exactly the section of spindle 16. Spindle 16 is then separated by cooling, and in so doing one obtains the detachment of the mirror comprising the gold layer 15, which remains supported by the resin layer 15, anchored, in its turn, to carrier 11 of spindle 16.

Carriers are obtained by means of a CVD process and are constituted by silicon carbide (SiC) and boron azide (BN).

According to a variant of this embodiment, carriers may also be prepared by means of a reaction syntherization process and are constituted by silicized silicon carbide and silicon. Such material is available on the market under the trade name CERAFORM, produced and sold by United Technology Optical System, West Palm Beach, FL (USA).

The utilization of carriers fabricated according to this invention allows to obtain mirrors having a very wide range of thicknesses, comprised generally between 0.3 and 10 mm. However, such carriers prove to be particularly suitable to prepare mirrors having very reduced thicknesses and typically comprised between 0.4 and 1 mm.

The aforementioned materials and in particular silicon carbide and boron azide, besides eliminating the above mentioned drawbacks arising from the utilization of nickel as mechanical structural element, allow also to achieve further advantages due to their physical-chemical characteristics specified in the table, and in particular:
- they provide the opportunity of obtaining mirrors having a better mechanical stiffness with smaller thicknesses, as they have a modulus of elasticity and a specific stiffness much greater than nickel; and
- they can undergo more easility the replica grating operation, as they have, as has been already mentioned, a thermal expansion coefficient much smaller than nickel.

The mirrors according to this invention are applied, not only in the field of X-ray telescopes, but also in other fields, such as, for instance, optics for X-ray microscopes and optics for lithographic utilizations.

Although the invention has been described with reference to specific and particular realization conditions, it is obvious that those expert in the art can introduce alternatives and changes, in the light of the above description.

Hence the invention covers any alternative and modification which fall within the protection scope of the following claims.

## Claims

1. Grazing incidence co-axial and confocal mirror, having a parabola/hyperbola, double cone truncated cone structure, or polynomial sections, said mirror comprising an internal reflecting surface (15), constituted by a gold layer, an epoxy resin layer (14) on which said gold layer is supported, and a mechanical structural supporting element or carrier (11), to which the resin layer (14) is anchored, characterized in that said carrier (11) is from ceramic material having a specific weight smaller than 8.8 kg m⁻³. 10³, a thermal expansion coefficient smaller than 14 K⁻¹10⁻⁶; a thermal conductivity greater than 90 W m⁻¹K⁻¹, a modulus of elasticity greater than 150 G Pa, a thermal distorsion parameter greater than 0.6 W m⁻¹10⁷ and a specific stiffness greater than 17 MN kg⁻¹10⁶.

2. Mirror according to claim 1, characterized in that the ceramic material has a specific weight comprised between 2 and 4 kg m⁻³ 10³, a thermal expansion coefficient comprised between 2 and 5 K⁻¹10⁻⁶, a thermal conductivity comprised between 150 and 1300 W m⁻¹K⁻¹, a modulus of elasticity comprised between 300 and 700 gPa, a thermal distorsion parameter comprised between 5 and 28 W m⁻¹ 10⁷ and a specific stiffness comprised between 100 and 350 MN kg⁻¹10⁶.

3. Mirror according to any of the preceding claims, characterized in that the ceramic material is constituted by silicon carbide.

4. Mirror according to any of the preceding claims 1 through 3, characterized in that the ceramic material is constituted by boron azide.

5. Mirror according to any of the preceding claims 1 or 2, characterized in that said carrier (11) is made from silicized silicon carbide.

6. Mirror according to any of the preceding claims, characterized in that said mirror has a thickness comprised between 0.3 and 10 mm.

7. Mirror according to any of the preceding claims, characterized in that said mirror has a thickness comprised between 0.4 and 1 mm.

8. Use of the mirror according to any of the preceding claims in the optics for X-ray telescopes utilized for astronomic observations.

9. Use of the mirror according to any of the preceding claims 1 through 8 in the optics for X-ray microscopes and for lythographic utilizations.

10. A process for manufacturing the grazing incidence co-axial and confocal mirror according to any of the preceding claims from 1 to 7, said process comprising:
- preparing a carrier (11) from ceramic material by a chemical vapour deposition process (CVA);
- fitting said carrier on a mandrel (16) of aluminium pre-covered with a layer (15) of gold by leaving a gap (13) of about 0.1 mm. between said carrier (11) and said mandrel (16);
- filling the gap (13) with a fluid epoxy resin which by polymerizing forms a layer covering exactly the section of the mandrel (16), and
- separating the mandrel (16) by cooling.

## Patentansprüche

1. Koaxialer und konfokaler Spiegel für streifenden Einfall mit einer parabolisch/hyperbolischen doppelkonischen kegelstumpfartigen Struktur auf polynomischen Abschnitten, wobei der Spiegel eine reflektierende Innenfläche (15) umfaßt, die durch eine Goldschicht, eine die Goldschicht tragende Epoxidharzschicht (14) und ein mechanisches stützendes Bauelement oder Träger (11) gebildet ist, wobei die Harzschicht (14) an dem Träger (11) verankert ist,
**dadurch gekennzeichnet,**
daß der Träger (11) aus einem Keramikmaterial gebildet ist mit einem spezifischen Gewicht kleiner als 8,8 kg m⁻³ 10³, einem Wärmeausdehnungskoeffizient kleiner als 14 K⁻¹10⁻⁶, einer Wärmeleitfähigkeit größer als 90 W m⁻¹K⁻¹, einem Elastizitätsmodul größer als 150 G Pa, einem Wärmeverformungsparameter größer als 0,6 W m⁻¹ 10⁴ und einer spezifischen Steifigkeit größer als 17 MN kg⁻¹10⁶.

2. Spiegel nach Anspruch 1, dadurch gekennzeichnet, daß das Keramikmaterial ein spezifisches Gewicht zwischen 2 und 4 kg m⁻³10³, einen Wärmeausdehnungskoeffizient zwischen 2 und 5 K⁻¹10⁻⁶, eine Wärmeleitfähigkeit zwischen 150 und 1300 W m⁻¹K⁻¹, einen Elastizitätsmodul zwischen 300 und 700 G pA, einen Wärmeverformungsparameter zwischen 5 und 28 W m⁻¹10⁷ und eine spezifische Steifigkeit zwischen 100 und 350 MN kg⁻¹10⁶ aufweist.

3. Spiegel nach einem der vorhergehenden Ansprüche, dadurch gekennzeichnet, daß das Keramikmaterial aus Siliziumkarbid gebildet ist.

4. Spiegel nach einem der Ansprüche 1 bis 3, dadurch gekennzeichnet, daß das Keramikmaterial aus Borazid gebildet ist.

5. Spiegel nach einem der Ansprüche 1 oder 2, dadurch gekennzeichnet, daß der Träger (11) aus siliciertem Siliziumkarbid gebildet ist.

6. Spiegel nach einem der vorhergehenden Ansprüche, dadurch gekennzeichnet, daß die Dicke des Spiegels zwischen 0,3 mm und 10 mm beträgt.

7. Spiegel nach einem der vorhergehenden Ansprüche, dadurch gekennzeichnet, daß die Dicke des Spiegels zwischen 0,4 mm und 1 mm beträgt.

8. Anwendung des Spiegels nach einem der vorhergehenden Ansprüche in den optischen Eigenschaften für Röntgenteleskope für astronomische Beobachtungen.

9. Anwendung des Spiegels nach einem der vorhergehenden Ansprüche 1 bis 8 in den optischen Eigenschaften für Röntgenmikroskope und für lithographische Anwendungen.

10. Verfahren zum Herstellen des koaxialen und konfokalen Spiegels für streifenden Einfall nach einem der vorhergehenden Ansprüche 1 bis 7, umfassend:
- Vorbereiten eines Trägers (11) aus Keramikmaterial durch eine Gasphasenabscheidung nach chemischem Verfahren (CVA),
- Anbringen des Trägers auf einem mit einer Goldschicht (15) vorbeschichteten Dorn (16) aus Aluminium, wobei ein Zwischenraum (13) von annähernd 0,1 mm zwischen dem Träger (11) und dem Dorn (16) entsteht,
- Füllen des Zwischenraums (13) mit einem flüssigen Epoxidharz, das durch Polymerisieren eine Schicht bildet, die den Abschnitt des Dorns (16) genau deckt, und
- Trennen des Dorns (16) durch Abkühlung.

## Revendications

1. Miroir à incidence rasante coaxial et à foyer commun, qui présente une structure tronconique double parabolique/hyperbolique ou des sections polynômes, ledit miroir comprenant une surface interne réfléchissante (15) formée par une couche d'or, une couche en une résine époxy (14) qui porte ladite couche d'or, et un élément portant ou support structurel mécanique (11) sur lequel est appliquée la couche en résine (14),
caractérisé en ce que ledit support (11) est réalisé en une matière céramique ayant un poids volumique inférieur à 8,8 kg m⁻³10³, un coefficient de dilatation thermique inférieur à 14 K⁻¹10⁻⁶, une conductivité thermique supérieure à 90 W m⁻¹K⁻¹, un facteur d'élasticité supérieur à 150 G Pa, un paramètre de distorsion thermique supérieur à 0,6 W m⁻¹10⁷, et une rigidité spécifique supérieure à 17 MN kg⁻¹10⁶.

2. Miroir selon la revendication 1,
caractérisé en ce que la matière céramique présente un poids volumique compris entre 2 et 4 kg m⁻³10³, un coefficient de dilatation thermique compris entre 2 et 5 K⁻¹10⁻⁶, une conductivité thermique comprise entre 150 et 1300 W m⁻¹K⁻¹, un facteur d'élasticité compris entre 300 et 700 G Pa, un paramètre de distorsion thermique compris entre 5 et 28 W m⁻¹10⁷, et une rigidité spécifique comprise entre 100 et 350 MN kg⁻¹10⁶'

3. Miroir selon l'une des revendications précédentes, caractérisé en ce que la matière céramique est du carbure de silicium.

4. Miroir selon l'une des revendications 1 à 3,
caractérisé en ce que la matière céramique est du nitrure de bore.

5. Miroir selon la revendication 1 ou 2,
caractérisé en ce que le support (11) est réalisé en carbure de silicium silicé.

6. Miroir selon l'une des revendications précédentes,
caractérisé en ce que l'épaisseur dudit miroir est comprise entre 0,3 et 10 mm.

7. Miroir selon l'une des revendications précédentes,
caractérisé en ce que l'épaisseur du miroir est comprise entre 0,4 et 1 mm.

8. Mise en oeuvre du miroir selon l'une des revendications précédentes dans l'optique de téléscopes à rayons X utilisés pour des observations astronomiques.

9. Mise en oeuvre du miroir selon l'une des revendications 1 à 8 dans l'optique de microscopes à rayons X, et pour des utilisations lythographiques.

10. Procédé de fabrication du miroir à incidence rasante coaxial et à foyer commun selon l'une des rvendications 1 à 7, ledit processus comprenant :
- la préparation d'un support (11) dans une matière céramique au moyen d'un processus de déposition en phase gazeuse par procédé chimique ;
- l'ajustement du support sur un mandrin (16) en aluminium couvert au préalable d'une couche d'or (15), tout en ménageant un interstice (13) de 0,1 mm environ entre le support (11) et le mandrin (16) ;
- le remplissage de cet interstice (13) avec de la résine d'époxy fluide qui, en se polymérisant, forme une couche qui couvre exactement la section du mandrin (16) ; et
- la séparation du mandrin (16) par refroidissement.
